# EUROPEAN PATENT SPECIFICATION

(11) **EP 2 865 889 B1**
(45) Date of publication and mention of the grant of the patent: **03.01.2018**
(21) Application number: 13190073.0
(22) Date of filing: 24.10.2013
(51) Int. Cl.: F03D 7/02, H02P 23/04

(54) **Damping of wind turbine drive train oscillations**
Dämpfung der Schwingungen eines Windturbinenantriebsstrangs
Amortissement d'oscillations de train d'entraînement de turbine éolienne

(43) Date of publication of application: 29.04.2015
(73) Proprietor: Siemens Aktiengesellschaft, 80333 München (DE)
(72) Inventor: Deng, Heng, 7330 Brande (DK)

(56) References cited:
- EP-A1- 2 487 784
- EP-A2- 2 224 129
- US-A1- 2013 049 660
- US-A1- 2013 106 330
- ANCA D. HANSEN ET AL: "Modelling and control of variable-speed multi-pole permanent magnet synchronous generator wind turbine", WIND ENERGY, vol. 11, no. 5, 1 September 2008 (2008-09-01), pages 537-554, XP055039493, ISSN: 1095-4244, DOI: 10.1002/we.278

## Description

### Field of invention

The present invention relates to a method and to an arrangement for controlling a wind turbine converter, in order to damp oscillations of a wind turbine drive train.

### Art Background

A wind turbine drive train may comprise a hub, to which plural rotor blades are connected, optionally a gearbox for transforming a rotational speed of a main shaft (to which the rotor blades are connected) to a secondary shaft, a generator which is coupled to the secondary shaft or main shaft (if no gearbox is present) and a converter, in particular a AC-DC-AC converter. During operation of the wind turbine, torque/speed oscillation of the blades and/or the entire drive train may occur which may have the risk for damaging of components of the wind turbine and which may therefore be a great challenge to cope with.

For example, in a variable speed wind turbine, torque/speed oscillations of the rotor blades and the drive train at resonance frequencies (at which the amplitude of the oscillations are especially high) may be excited by a dip in the grid voltage and/or by a change of the wind speed. These kinds of oscillations may cause a turbine trip and/or structural damages of blades and portions of the drive train. Thereby, it is necessary to damp drive train oscillations in almost all variable speed wind turbines. In order to damp resonance frequencies of the drive train, it may be known to control power output of the wind turbine to the utility grid at the drive train resonance frequency so that oscillation of torque/speed at this frequency may be damped, i.e. such that amplitudes of the oscillations are reduced compared to the case, where no measures to damp the resonance frequencies are taken.
It has been observed that conventional methods for reducing damping of resonance frequencies may involve that the DC link voltage has oscillations at the drive train frequency especially when drive train frequency is higher than the bandwidth of the DC link voltage controller. Oscillation in the DC link voltage may trip the converter (i.e. may require shutdown of the converter) due to saturation of both generator side converter and grid side converter. Such methods are disclosed for instance by EP 2 224 129 A1 or EP2 487 784 A1. There may be a need for a method and for an arrangement for controlling a wind turbine converter, in which resonance frequencies of the drive train are effectively damped, thereby reducing the risk of damage of wind turbine components during operation of the wind turbine, in particular at resonance frequencies of the drive train, and further to improve maintenance of an intended DC voltage at the DC link.

### Summary of the Invention

This need may be met by the subject matter according to the independent claims. Advantageous embodiments of the present invention are described by the dependent claims.
Embodiments of the present invention provide methods and arrangements for damping of both torque/speed oscillations of rotor/drive train and at the same time for maintaining constant DC link voltage of a frequency converter in a variable speed wind turbine.
According to an embodiment of the present invention, it is provided a method according to claim 1 for controlling a wind turbine converter having a generator side converter portion and a grid side converter portion, the method comprising: determining a damping power signal based on an actual rotor speed/frequency, controlling the generator side converter portion and the grid side converter portion based on the damping power signal.

The control method may be performed by a wind turbine controller or by a wind park controller or by both a wind turbine controller and a wind park controller. The generator side converter portion of the converter may have an input terminal which is connected to an output terminal of an electric generator of the wind turbine. At the input terminal of the generator side converter portion, a variable frequency AC power stream may be received from the electrical generator. An output terminal of the generator side converter portion of the converter may comprise a first and a second DC output terminal between which a DC output voltage may be generated by the generator side converter portion. Between the first and the second DC output terminal, a capacitor (or a capacitor bank or a plurality of capacitors) may be arranged to smoothen the DC output voltage generated by the generator side converter portion.

The grid side converter portion may have input terminals connected to the first and the second DC output terminals of the generator side converter portion. The grid side converter portion may convert a direct current or DC power stream to a fixed frequency AC power stream which is then, in particular via one or more transformers supplied to a utility grid which supply electric energy to a plurality of consumers. Both, the generator side converter portion and the grid side converter portion of the wind turbine converter may each comprise plural power transistors, such as IGBTs, which may be controlled by gate drive signals supplied to their gates which are generated by gate drive circuits. The gate drive signals may comprise pulse width modulation signals which may be adapted, in order to generate an AC output power stream at output terminals of the grid side converter portion which has a desired frequency, voltage, active power and reactive power.

The actual rotor frequency may be estimated or measured, e.g. by an encoder. The rotor frequency may be related (or equal) to a frequency of a main shaft (to which the rotor blades are connected) or to a secondary shaft, which may be coupled to the main shaft via an optional gearbox. The rotor frequency may as well be related (or equal) to a frequency of a shaft rotating within the electrical generator of the wind turbine. In particular embodiments, the shaft of the generator may comprise the main rotor shaft or the secondary shaft. Depending on the actual rotor frequency, the wind turbine drive train may require to perform different measures for dampening the amplitudes of the oscillations. If the actual rotor frequency approaches a resonance frequency of the drive train, there may be a risk of exciting an oscillation at the resonance frequency which may involve high amplitudes of the oscillation which may damage components of the wind turbine. In particular, at the resonance frequency (or the plural resonance frequencies) of the drive train, the damping power signal may be higher than at frequencies of the rotor frequency far apart from the resonance frequency or the plural resonance frequencies. In particular, the damping power signal may be characterized by an amplitude, frequency and a phase. In particular, amplitude and phase of the damping power signal may be determined such that utilization of the damping power signal in further downstream control sections results in a decrease of the amplitude of the oscillations of the drive train, in particular at the resonance frequency(s). Both, controlling the generator side converter portion and controlling the grid side converter portion is based on the damping power signal, so that controlling the generator side converter portion and also controlling the grid side converter portion depends on the (amplitude and/or phase and/or frequency) of the damping power signal.

In particular, according to embodiments of the present invention, a control method for damping drive train/blade oscillations in a variable speed wind turbine sends damping power signals to both generator side converter portion and a grid side converter portion, so that the DC link oscillation of the voltage may be significantly reduced. In particular, to damp the oscillation of the drive train/blade, harmonic power at resonance frequencies of the drive train/blade may be produced by an electrical generator which can be induction generator or permanent magnet generator. In order to reduce oscillations of the DC link voltage, power balance (or energy balance) of both the generator side converter portion and the grid side converter portion may be needed at drive train resonance frequencies. The power balance or energy balance between the two different converter portions may be achieved by sending damping power signals to both the generator side converter portion as well as the grid side converter portion.

According to an embodiment of the present invention, the control method further comprises determining a power reference for the generator side converter portion or the grid side converter portion based on a comparison between a reference (or intended) DC voltage and an actual DC voltage being a voltage at the DC link (the DC link being connected between the generator side converter portion and the grid side converter portion). In particular, the voltage at the DC link may be output by the generator side converter portion and input to the grid side converter portion, when energy flow is (temporarily) from the generator side converter portion to the grid side converter portion. In other instances, the voltage output at the DC link may be output by the grid side converter portion and input to the generator side converter portion, when energy flow is (temporarily) from the grid side converter portion to the generator side converter portion.

The power reference (or alternatively a voltage reference, reactive power reference, active power reference, current reference) may as an alternative signal, for example voltage signal, be supplied to the generator side converter portion or the grid side converter portion, respectively. In particular, a DC link controller may have input terminals for receiving a reference DC voltage and an actual DC voltage (i.e. measured, in particular at the DC link) and may comprise a controller, such as a PI controller which may generate the power reference such that the actual DC voltage approaches or even equals the reference DC voltage. Using the DC link controller and comparing the reference DC voltage with an actual DC voltage may facilitate keeping the DC voltage at a predetermined desired reference DC voltage, in particular avoiding ripples of the actual DC voltage.

According to an embodiment of the present invention, a DC link controller comparing the reference DC voltage with the actual DC voltage and providing a power reference such as to minimize the deviation between the actual DC voltage and the reference DC voltage may either be arranged within a generator side converter controller or a grid side converter controller. In the following, the case is considered, in which the DC link controller is situated within the generator side converter controller.

According to an embodiment of the present invention, the method further comprises adding the power reference for the generator side converter portion to the damping power signal, to obtain a modified power reference for the generator side converter portion, determining a control signal for the generator side converter portion based on the modified power reference for the generator side converter portion involving calculation of a generator current reference and comparing the generator current reference to an actual generator current.

Thus, the damping power signal (or a signal derived therefrom) is added to the power reference for the generator side converter portion which is based on a comparison between a reference DC voltage and an actual DC voltage (in particular being a signal such that the reference DC voltage and the actual DC voltage approach each other or are even equal to each other). The sum of the power reference and the damping power signal is the modified power reference for the generator side converter portion. This modified power reference for the generator side converter portion may be supplied to a generator current reference calculation section which calculates therefrom the generator current reference which may then be input, together with an actual generator current, to a generator current controller which in turn may output the control signal for the generator side converter portion, which may for example be a voltage signal.

In this way, the damping power signal may be effectively taken into account in the generator side converter controller controlling the generator side converter portion, via the control signal for the generator side converter portion.

According to an embodiment of the present invention, in which the generator side converter controller comprises the DC link controller, the method further comprises adding a wind turbine reference power signal to a compensated damping power signal derived from the damping power signal, to obtain a modified power reference for the grid side converter portion; determining a control signal for the grid side converter portion based on the modified power reference for the grid side converter portion involving calculation of a grid current reference and comparing the grid current reference to an actual grid current.

Thereby, also the grid side converter controller receives a signal based on the damping power signal, in order to generate the control signal for the grid side converter portion, such that an energy balance or a power balance between the generator side converter portion and the grid side converter portion may be achieved or maintained.

In particular, the modified power reference for the grid side converter portion may be supplied to a grid current reference calculation module which may calculate a grid current reference which may be, together with an actual grid current, input to a grid current controller which thereupon determines the control signal for the grid side converter portion which may then be supplied to the grid side converter portion.

According to alternative embodiments, the DC link controller may be situated within a grid side converter controller but not within the generator side converter controller. Further details of this case are considered below.

According to an embodiment of the present invention, the method further comprises adding the power reference for the grid side converter portion to a compensated damping power signal derived from the damping power signal, to obtain a modified power reference for the grid side converter portion; determining a control signal for the grid side converter portion based on the modified power reference for the grid side converter portion involving calculation of a grid current reference and comparing the grid current reference to an actual grid current.

After having determined the power reference for the grid side converter portion based on a comparison between a reference DC voltage and an actual DC voltage (in particular using the DC link controller), the power reference for the grid side converter portion is added to the damping power signal or to a compensated damping power signal (obtained by running the damping power signal through a gain phase compensator), to obtain a modified power reference for the grid side converter portion. This modified power reference for the grid side converter portion may be supplied to a grid current reference calculation block which thereupon determines a grid current reference which, together with an actual grid current, may be input to a grid current controller which derives thereupon the control signal for the grid side converter portion which may then be supplied to the grid side converter portion.

According to an embodiment of the present invention, the damping power signal is also considered in a generator side converter controller, as explained below.

According to an embodiment of the present invention, the method further comprises adding a wind turbine reference power signal to the damping power signal, to obtain a modified power reference for the generator side converter portion; determining a control signal for the generator side converter portion based on the modified power reference for the generator side converter portion involving calculation of a generator current reference and comparing the generator current reference to an actual generator current.

The wind turbine reference power signal may represent a desired power which is output by the wind turbine. To the wind turbine reference power signal, the damping power signal is added, to obtain the modified power reference for the generator side converter portion. The modified power reference for the generator side converter portion may be supplied to a generator current reference calculation block which may derive therefrom the generator current reference which is, together with an actual grid current, supplied or input to a generator current controller which, thereupon, may determine the control signal for the generator side converter portion. Thereby, in both a generator side converter controller and the grid side converter controller, the damping power signal is considered, in order to derive the control signals for the generator side converter portion and the grid side converter portion, respectively.

Thereby, energy balance between the generator side converter portion and the grid side converter portion of the wind turbine converter may be achieved or maintained.

The following embodiments apply to both cases in which the DC link controller is situated within the generator side converter controller as well as in which the DC link controller is situated within the grid side converter controller.

According to an embodiment of the present invention, determining the control signal for the generator side converter portion or the control signal for the grid side converter portion involves transformation in a d-q coordinate system rotating with an actual generator rotor frequency. Transformation of the quantities into the d-q coordinate system may simplify the calculations.

According to an embodiment of the present invention, determining the damping power signal based on the actual rotor frequency comprises: filtering the actual rotor frequency, and/or gain phase compensating the actual rotor frequency or a filtered actual rotor frequency, to obtain a compensated damping power signal, and/or limiting the compensated damping power signal to be between an upper threshold and a lower threshold.

Thereby, the damping power signal may be determined such that an effective damping of the drive train oscillations may result.

According to an embodiment of the present invention, the damping power signal is determined further based on at least one resonance frequency of a drive train comprising the rotor.

The at least one resonance frequency of the drive train of the wind turbine may have been determined previously and may have a fixed value.

According to an embodiment of the present invention, based on the control signal for the generator side converter portion a gate drive circuit of the generator side converter portion generates pulse width modulation signals for gates of transistors comprised in the generator side converter portion.

According to an embodiment of the present invention, based on the control signal for the grid side converter portion a gate drive circuit of the grid side converter portion generates pulse width modulation signals for gates of transistors comprised in the grid side converter portion.

The control signal for the generator side converter portion may represent in some sense a characteristic of the input variable frequency AC power stream input at the generator side converter portion which may be converted to a DC power stream at the DC link. Based on the characteristics of the input AC power stream, the gate drive circuit may be capable of generating suitable pulse width modulation signals such that by driving the plural transistors of the generator side converter portion, the variable frequency AC power stream may be converted, at the DC link, to a DC power stream.

Further, the control signal for the grid side converter portion may represent a characteristic of a desired output AC power stream at the grid side converter portion. Further, the gate drive circuit of the grid side converter portion may be capable of, based on the characteristics of the intended output AC power stream, to generate suitable pulse width modulation signals which, when supplied to gates of the plural transistors of the grid side converter portion, cause them to open and close such that the intended fixed frequency AC power stream is output at output terminals of the grid side converter portion.

According to an embodiment of the present invention, determining the control signal for the generator side converter portion based on the modified power reference for the generator side converter portion comprises determining, based on the modified power reference, a power/torque reference and/or a generator voltage and/or DC-link voltage which is input for current reference calculation, wherein in particular a generator current controller comprises a PI-controller, and/or wherein determining the control signal for the grid side converter portion based on the modified power reference for the grid side converter portion comprises using, in particular considering the modified power reference, a grid voltage and/or a DC-link voltage and/or grid current and/or grid power as input for current reference calculation, wherein in particular a generator current controller comprises a PI-controller.
Thus, instead of power, also voltage reference, current reference, reactive power reference or a combination thereof may be used as suitable input signals for determining the control signal for the generator side converter portion or the grid side converter portion of the wind turbine converter.
It should be understood that features which are individually or in any combination disclosed, described, explained or provided for a method for controlling a wind turbine converter may also be applied, individually or in any combination, to an arrangement for controlling a wind turbine converter according to an embodiment of the present invention and vice

According to an embodiment of the present invention, it is provided an arrangement according to claim 13 for controlling a wind turbine converter having a generator side converter portion and a grid side converter portion, the arrangement comprising: a determining section adapted to determine a damping power signal (P_DTD) based on an actual rotor frequency, a controlling section adapted to control the generator side converter portion and the grid side converter portion based on the damping power signal.

One or more sections or modules of the arrangement may comprise computer program code which is adapted, when carried out by a suitable processing engine, to carry out embodiments of a method for controlling a wind turbine converter, as described above.
According to an embodiment of the present invention, a wind turbine is provided which comprises a generator, a converter coupled to the generator and having a generator side converter portion and a grid side converter portion and an arrangement for controlling a wind turbine converter as described above which is coupled to the generator side converter portion and the grid side converter portion of the wind turbine converter.

The arrangement for controlling the wind turbine converter may be adapted to carry out a method for controlling a wind turbine converter according to one of the embodiments as described above.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

Embodiments of the present invention are now described with reference to the accompanying drawings. The invention is not limited to the illustrated or described embodiments.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Fig. 1 schematically illustrates a variable speed wind turbine according to an embodiment of the present invention including an arrangement for controlling a wind turbine converter according to an embodiment of the present invention;
Fig. 2 schematically illustrates an arrangement for controlling a wind turbine converter according to an embodiment of the present invention being capable of performing a method for controlling a wind turbine converter according to an embodiment of the present invention;
Fig. 3 schematically illustrates an arrangement for controlling a wind turbine converter according to an embodiment of the present invention being capable of performing a method for controlling a wind turbine converter according to an embodiment of the present invention;
Fig. 4 schematically illustrates a drive train damping controller as used in an embodiment of an arrangement for controlling a wind turbine converter.

### Detailed Description

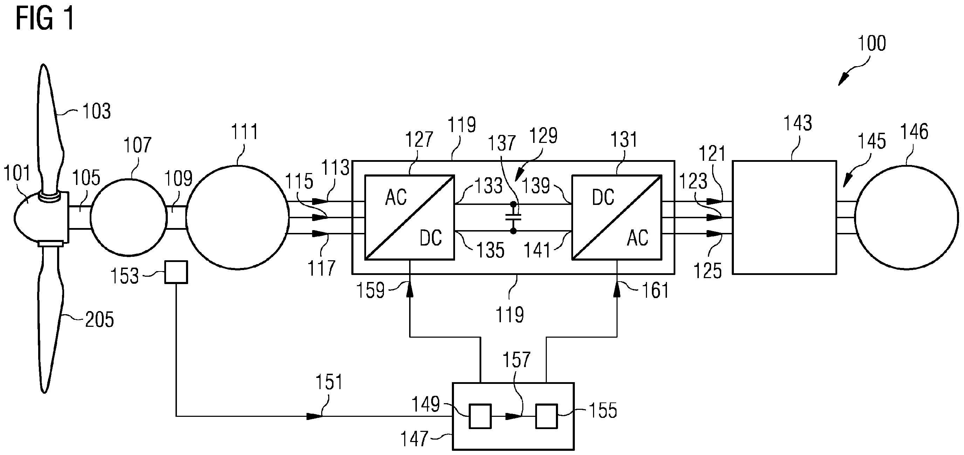

The variable speed wind turbine 100 illustrated in Fig. 1 comprises a hub 101 to which plural rotor blades 103 are connected, wherein the hub 101 is attached to a main shaft 105 of the wind turbine. Optionally, a gearbox 107 is arranged between the main shaft 105 and a secondary shaft 109 which is coupled to the electrical generator 111, such as a permanent magnet generator or an induction generator. The generator 111 outputs a variable frequency AC power stream having three phases 113, 115, 117. In other embodiments, two phases or more than three phases, such as four phases, five phases, six, phases, or even more phases may be output by the generator 111.

The AC power stream 113, 115, 117 is provided to a converter 119 which converts the variable frequency AC power stream 113, 115, 117 to a fixed frequency AC power stream in three phases 121, 123, 125. Thereby, the converter 119 embodies a AC-DC-AC converter comprising a generator side converter portion 127, a DC link 129 and a grid side converter portion 131. The generator side converter portion 127 receives the variable frequency AC power stream 113, 115, 117 and converts the power stream to a DC power stream which is output at the output terminals 133, 135 between which the DC link voltage is generated. Between the output terminals 133 and 135 of the generator side converter portion 127, a capacitor 137 is included in the DC link 129.

The grid side converter portion 131 receives the DC power stream at input terminals 139, 141 and transforms the DC power stream to the fixed frequency power stream 121, 123, 125. The fixed AC power stream is transformed via a wind turbine transformer 143 to a higher voltage and is, via a transmission line 145, transferred to a utility grid 146 having a predetermined grid frequency.

The frequency converter 119 is used, to interface the AC power from the generator 111 to the power grid 146. Both the generator side converter portion 127 and the grid side converter portion 131 comprise power electronic devices which comprise pulse width modulated controlled IGBT or other power controllable switches, such as power transistors.

The wind turbine 100 further comprises an arrangement 147 for controlling the wind turbine converter 119 according to an embodiment of the present invention. Thereby, the arrangement 147 comprises a determining section 149 which is adapted to determine a damping power signal 157 based on an actual rotor frequency 151 (ωg) (corresponding or being equal to the generator rotor frequency) which is supplied to the arrangement 147 from a measuring device, such as an encoder, 153 which measures the rotational speed or frequency of the secondary shaft 109 and/or the primary or main shaft 105. Further, the arrangement 147 comprises a controlling section 155 which is adapted to control the generator side converter portion 127 and the grid side converter portion 131 based on the damping power signal 157 by sending a control signal 159 to the generator side converter portion 127 and by sending another control signal 161 to the grid side converter portion 131. The control signal 159 is used by not illustrated gate drive circuits within the generator side converter portion 127 in order to generate pulse width modulation signals which are then supplied to controllable power switches within the generator side converter portion. Similarly, the control signal 161 for the grid side converter portion 131 is utilized by gate drive circuits within the grid side converter portion 131 in order to generate pulse width modulation signals which are transmitted to gates of controllable power switches within the grid side converter section 131.

The arrangement 147 for controlling the wind turbine converter may be configured into different embodiments, in which the DC link voltage at the DC link 129 may be controlled from either the generator side converter portion or the grid side converter portion 127, 131.

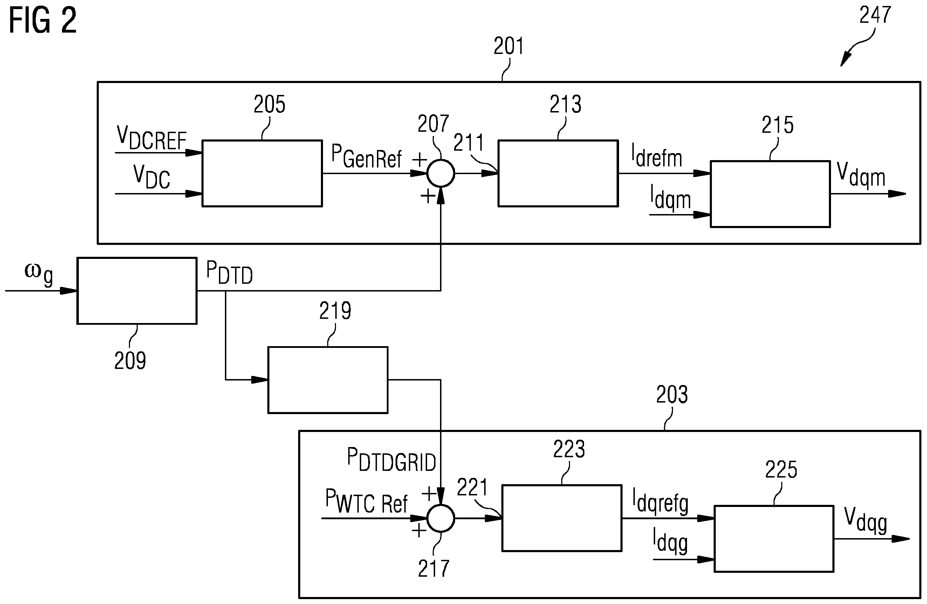

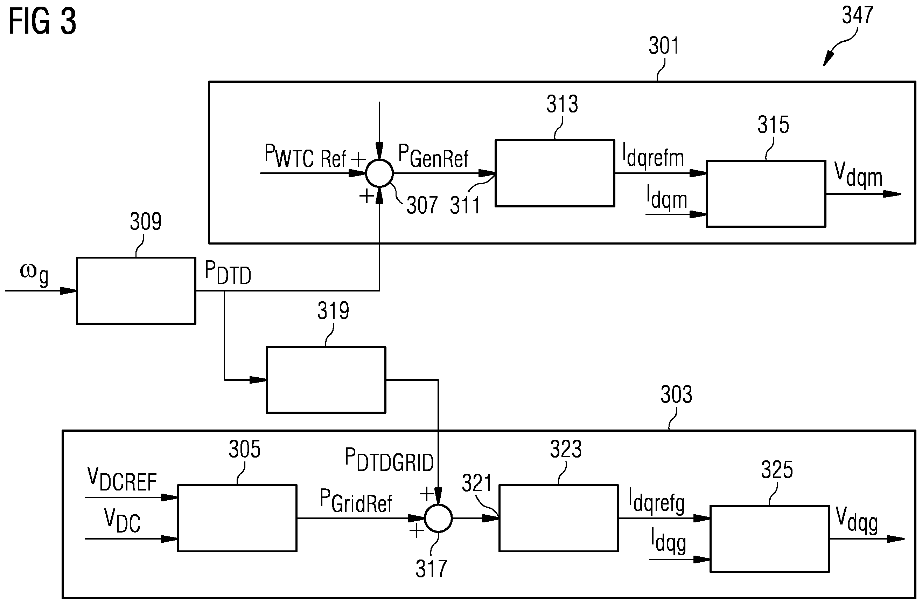

Fig. 2 schematically illustrates an arrangement 247 for controlling a wind turbine converter according to an embodiment of the present invention in which a DC link controller 205 is situated within a generator side converter controller 201, whereas Fig. 3 illustrates an arrangement 347, in which a DC link controller 305 is situated in a grid side converter controller 303. It should be understood that features which are identical or similar in Figs. 2 and 3 are denoted with same reference numbers differing only in the first digit. A feature not described in detail in one figure may therefore be understood from the respective description regarding the other figure.

The arrangement 247 illustrated in Fig. 2 comprises a generator side converter controller 201 and a grid side converter controller 203. The generator side converter controller 201 comprises a DC link controller 205 which receives a reference DC voltage (V_DCRef) and an actual DC voltage (V_DC) and outputs a power reference (P_GenRef) for the generator side converter portion. This power reference P_GenRef is supplied to an addition element 207 to add a damping power signal (P_DTD) which has been determined using a drive train damping controller 209 based on a rotational frequency ω_{g} of the generator, the primary shaft or the secondary shaft. The actual DC voltage V_DC is measured between the terminals 133 and 135 of the generator side converter portion 127, thus representing the voltage at the DC link 129 of the converter 119, as is illustrated in Fig. 1. The sum of the power reference P_GenRef for the generator side converter portion and the damping power signal P_DTD is referred to as the modified power reference 211 for the generator side converter portion and is input to the generator current reference calculation section 213 which outputs a generator current reference I_dqrefm and which is input, together with an actual generator current (I_dqm) to a generator current controller 215 which thereupon outputs a control signal V_dqm for the generator side converter portion which may be equal to the control signal 159 as illustrated in Fig. 1.

The grid side converter controller 203 comprises also an addition element 217 which adds together a wind turbine reference power signal P_WTCRef and a compensated damping power signal P_DTDGrid which has been obtained by running the damping power signal P_DTD through a gain phase compensator 219. The sum of the wind turbine reference power signal P_WTCRef and the compensated damping power signal P_DTDGrid is also referred to as modified power reference 221 for the grid side converter portion and is input to the grid current reference calculation module 223 which calculates a grid current reference I_dqrefg which, together with an actual grid current I_dqg is input to a grid current controller 225 which thereupon outputs a control signal V_dqg which is then supplied to the grid side converter portion and which may be represented by the signal 161, as is illustrated in Fig. 1.

In particular, the wind turbine power reference P_WTCRef is sent from a wind turbine controller to the grid side converter controller 203. The damping power signal P_DTD is achieved in active drive train damping controller based on estimated or measured rotor speed ω_{g}. The DC link voltage is regulated to the DC link voltage reference V_DCRef using the DC link voltage controller 205. The output of the DC link voltage controller 205 is used to determine the power reference of the generator. The generator power reference from the DC link voltage controller 205 is added together with the damping power signal P_DTD. The references of generator Id and Iq currents are calculated based on this power reference.

The same damping power signal P_DTD is processed by phase and gain compensation block 219 and is then added to the power reference P_WTCRef and the sum is sent to the grid side converter controller 223. Thereby, the DC link voltage V_DC has fewer ripples than observed in the conventional methods. Further, turbine trips due to situations or DC link voltage oscillation may be avoided.

The current reference calculation block 213 is used to fundamental current reference in synchronous rotating d-q frame. The input to the block could be power/torque reference, generator voltage, DC link voltage and power/torque. It is also possible to use some combination of these signals as input. Current references could be calculated based on generator voltage controller, maximum torque per ampere requirement, etc. depending on application requirements. The closed-loop regulations of Id Iq current is achieved by the generator current controller 215. As an example, a PI-controller may be used in this block to achieve the control target.

The current reference calculation module 223 in the grid side converter controller 203 is used to fundamental current reference in synchronous rotating d-q frame of grid voltage. The input to the block could be power reference, grid voltage, DC link voltage, grid current and power. It is also possible to use some combination of the signals as inputs. Current references could be calculated based on grid voltage controller, fault right through requirements, etc. depending on application requirements.

In Fig. 3, the arrangement 347 for controlling a wind turbine converter is illustrated, in which the DC link controller 305 is located within the grid side converter controller 303 instead within the generator side converter controller 301 as is the case in the embodiment illustrated in Fig. 2. Apart from that, a number of elements is similar or even identical to elements illustrated in Fig. 2 having the same reference number differing only in the first digit. In particular, the wind turbine power reference P_WTCRef is sent from the wind turbine controller to the generator side converter controller 301, in particular to the adding element 307 which adds the damping power signal P_DTD to the wind turbine power reference P_WTCRef, to obtain a modified power reference 311 for the generator controller. The damping power signal P_DTD is achieved in active drive train damping controller 309 based on estimated or measured rotor speed ω_{g}. The power reference from the wind turbine controller is added together with the damping power signal P_DTD as an input signal 311 to the power reference of the generator controller. The references of the generator Id and Iq current are calculated based on this power reference.

The DC link voltage is regulated to the DC link voltage reference V_DCRef by the DC link voltage controller 305. The output of the DC link voltage controller 305 is a power reference P_GridRef of the grid controller. The same damping power signal P_DTD is processed by the phase and gain compensation module 319 and then added to the power reference P_GridRef sent from the DC link voltage controller 305 as a total power reference 321 for the grid controller. By doing this, the DC link voltage has fewer ripples than in conventional systems. Turbine trips due to the saturation or DC link voltage oscillation may also be avoided.

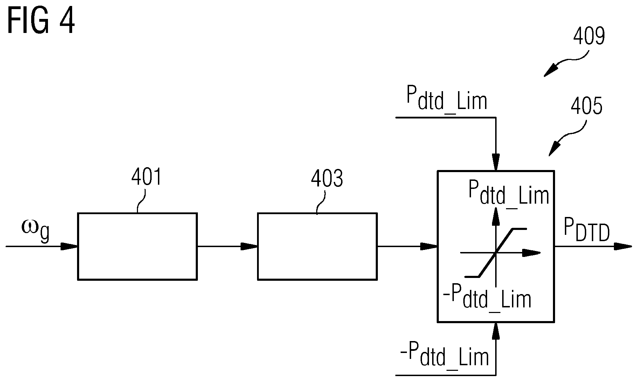

Fig. 4 schematically illustrates a drive train damping controller 409 according to an embodiment of the present invention, which may be employed as the drive train damping controllers 209 or 309 in Figs. 2 or 3.

The rotor speed ω_{g} from an encoder or speed/position observer runs to a filter 401 which attenuates constant components. The block 403 performs a phase and gain compensation, in order to adjust phase and gain of the damping power, so that high damping performance can be achieved. The output damping power is limited by the limiting element 405 to lie between thresholds P_DTD_lim and -P_DTD_lim, dependent on nominal power of the wind turbine. The section 409 outputs the damping power signal P_DTD consistent with the nomenclature used in Figs. 2 and 3. The proposed scheme may achieve active drive train damping of rotor/blades with very low DC link voltage oscillation. Further, turbine trips due to situation or DC link voltage oscillation may be avoided.

According to embodiments of the present invention, oscillation of torque and speed of drive train and blades is actively damped. Further, this may not cause DC link voltage oscillations. Embodiments of the present invention may not have additional costs. Further, no change requirements for hardware of available products may be required.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Method for controlling a wind turbine converter (119) having a generator side converter portion (127) connected to an electric generator of the wind turbine and a grid side converter portion (131), the method comprising:
determining a damping power signal (P_DTD) based on an actual rotor frequency (ωg) of the electric generator of the wind turbine;
controlling the generator side converter portion (127) based on the damping power signal (P_DTD); and
controlling the grid side converter portion (131) based on a compensated damping power signal (P_DTDGrid) derived from the damping power signal (P_DTD).

2. Method according to claim 1, further comprising:
determining a power reference (P_GenRef, P_GridRef) for the generator side converter portion (127) or the grid side converter portion (131) based on a comparison between a reference DC voltage (V_DCRef) and an actual DC voltage (V_DC) being a voltage at a DC link of the wind turbine converter.

3. Method according to claim 1 or 2, further comprising:
adding the power reference (P_GenRef) for the generator side converter portion to the damping power signal (P_DTD), to obtain a modified power reference (211) for the generator side converter portion;
determining a control signal (V_dqm, 159) for the generator side converter portion (127) based on the modified power reference (211) for the generator side converter portion involving calculation of a generator current reference (I_dqrefm) and comparing the generator current reference to an actual generator current (I_dqm).

4. Method according to claim 3, further comprising:
adding a wind turbine reference power signal (P_WTCRef) to the compensated damping power signal (P_DTDGrid), to obtain a modified power reference (221) for the grid side converter portion;
determining a control signal (V-dqg) for the grid side converter portion (131) based on the modified power reference (221) for the grid side converter portion involving calculation of a grid current reference (I_dqrefg) and comparing the grid current reference to an actual grid current (I_dqq).

5. Method according to claim 1 or 2, further comprising:
adding the power reference (P_GridRef) for the grid side converter portion to the compensated damping power signal (P_DTDGrid) derived from the damping power signal (P_DTD), to obtain a modified power reference (321) for the grid side converter portion (131);
determining a control signal (V-dqg) for the grid side converter portion based on the modified power reference (321) for the grid side converter portion involving calculation of a grid current reference (I_dqrefg) and comparing the grid current reference to an actual grid current (I_dqq).

6. Method according to claim 5, further comprising:
adding a wind turbine reference power signal (P_WTCRef) to the damping power signal (P_DTD), to obtain a modified power reference (311) for the generator side converter portion (127);
determining a control signal (V_dqm) for the generator side converter portion (127) based on the modified power reference (311) for the generator side converter portion involving calculation of a generator current reference (I_dqrefm) and comparing the generator current reference to an actual generator current (I_dqm).

7. Method according to one of the preceding claims, wherein determining the control signal (V_dqm) for the generator side converter portion (127) or the control signal (V_dqg) for the grid side converter portion (131) involves transformation in a d-q coordinate system rotating with an actual generator rotor frequency.

8. Method according to one of the preceding claims, wherein determining the damping power signal (P_DTD) based on the actual rotor frequency comprises:
filtering the actual rotor frequency; and/or
gain phase compensating the actual rotor frequency or a filtered actual rotor frequency, to obtain the compensated damping power signal; and/or
limiting the compensated damping power signal to be between an upper threshold and a lower threshold.

9. Method according to one of the preceding claims, wherein the damping power signal (P_DTD) is determined further based on at least one resonance frequency of a drive train (105, 107, 109, 111) comprising the rotor (105).

10. Method according to one of the preceding claims, wherein based on the control signal (V_dqm) for the generator side converter portion (127) a gate drive circuit of the generator side converter portion generates pulse width modulation signals for gates of transistors comprised in the generator side converter portion (127).

11. Method according to one of the preceding claims, wherein based on the control signal (V_dqq) for the grid side converter portion (131) a gate drive circuit of the grid side converter portion generates pulse width modulation signals for gates of transistors comprised in the grid side converter portion.

12. Method according to one of the preceding claims,
wherein determining the control signal (V_dqm) for the generator side converter portion based on the modified power reference for the generator side converter portion comprises determining, based on the modified power reference, a power/torque reference and/or a generator voltage and/or DC-link voltage which is input for current reference calculation, wherein in particular a generator current controller comprises a PI-controller, and/or
wherein determining the control signal (V_dqg) for the grid side converter portion based on the modified power reference for the grid side converter portion comprises using, in particular considering the modified power reference, a grid voltage and/or a DC-link voltage and/or grid current and/or grid power as input for current reference calculation, wherein in particular a generator current controller comprises a PI-controller.

13. Arrangement (147,247,347) for controlling a wind turbine converter (119) having a generator side converter portion (127) connected to an electric generator of the wind turbine and a grid side converter portion (131), the arrangement comprising:
a determining section (149) adapted to determine a damping power signal (P_DTD) based on an actual rotor frequency (ωg) of the electric generator of the wind turbine;
a controlling section (155) adapted
to control the generator side converter portion (127) based on the damping power signal (P_DTD), and
to control the grid side converter portion (131) based on a compensated damping power signal (P_DTDGrid) derived from the damping power signal (P_DTD).

14. Wind turbine (100) comprising:
a generator (111);
a converter (119) coupled to the generator and having a generator side converter portion (127) and a grid side converter portion (131); and
an arrangement (147, 247, 347) according to claim 13.

## Patentansprüche

1. Verfahren zur Steuerung eines Windturbinenumrichters (119), der einen generatorseitigen Umrichterteil (127), der mit einem elektrischen Generator der Windturbine verbunden ist, und einen netzseitigen Umrichterteil (131) aufweist, wobei das Verfahren umfasst:
Bestimmen eines Dämpfungsleistungssignals (P_DTD) basierend auf einer Ist-Rotorfrequenz (ωg) des elektrischen Generators der Windturbine;
Steuern des generatorseitigen Umrichterteils (127) basierend auf dem Dämpfungsleistungssignal (P_DTD); und
Steuern des netzseitigen Umrichterteils (131) basierend auf einem kompensierten Dämpfungsleistungssignal (P_DTDGrid), das von dem Dämpfungsleistungssignal (P_DTD) abgeleitet wurde.

2. Verfahren nach Anspruch 1, ferner umfassend:
Bestimmen einer Leistungsreferenz (P_GenRef, P_GridRef) für den generatorseitigen Umrichterteil (127) oder den netzseitigen Umrichterteil (131) basierend auf einem Vergleich zwischen einer Referenz-Gleichspannung (V_DCRef) und einer Ist-Gleichspannung (V_DC), welche eine Spannung an einem Gleichspannungszwischenkreis des Windturbinenumrichters ist.

3. Verfahren nach Anspruch 1 oder 2, ferner umfassend:
Addieren der Leistungsreferenz (P_GenRef) für den generatorseitigen Umrichterteil zu dem Dämpfungsleistungssignal (P_DTD), um eine modifizierte Leistungsreferenz (211) für den generatorseitigen Umrichterteil zu erhalten;
Bestimmen eines Steuersignals (V_dqm, 159) für den generatorseitigen Umrichterteil (127) basierend auf der modifizierten Leistungsreferenz (211) für den generatorseitigen Umrichterteil, was die Berechnung einer Generatorstromreferenz (I_dqrefm) und das Vergleichen der Generatorstromreferenz mit einem Ist-Generatorstrom (I_dqm) beinhaltet.

4. Verfahren nach Anspruch 3, ferner umfassend:
Addieren eines Windturbinen-Referenzleistungssignals (P_WTCRef) zu dem kompensierten Dämpfungsleistungssignal (P_DTDGrid), um eine modifizierte Leistungsreferenz (221) für den netzseitigen Umrichterteil zu erhalten;
Bestimmen eines Steuersignals (V-dqg) für den netzseitigen Umrichterteil (131) basierend auf der modifizierten Leistungsreferenz (221) für den netzseitigen Umrichterteil, was die Berechnung einer Netzstromreferenz (I_dqrefg) und das Vergleichen der Netzstromreferenz mit einem Ist-Netzstrom (I_dqq) beinhaltet.

5. Verfahren nach Anspruch 1 oder 2, ferner umfassend:
Addieren der Leistungsreferenz (P_GridRef) für den netzseitigen Umrichterteil zu dem kompensierten Dämpfungsleistungssignal (P_DTDGrid), das von dem Dämpfungsleistungssignal (P_DTD) abgeleitet wurde, um eine modifizierte Leistungsreferenz (321) für den netzseitigen Umrichterteil (131) zu erhalten;
Bestimmen eines Steuersignals (V_dqg) für den netzseitigen Umrichterteil basierend auf der modifizierten Leistungsreferenz (321) für den netzseitigen Umrichterteil, was die Berechnung einer Netzstromreferenz (I_dqrefg) und das Vergleichen der Netzstromreferenz mit einem Ist-Netzstrom (I_dqq) beinhaltet.

6. Verfahren nach Anspruch 5, ferner umfassend:
Addieren eines Windturbinen-Referenzleistungssignals (P_WTCRef) zu dem Dämpfungsleistungssignal (P_DTD), um eine modifizierte Leistungsreferenz (311) für den generatorseitigen Umrichterteil (127) zu erhalten;
Bestimmen eines Steuersignals (V_dqm) für den generatorseitigen Umrichterteil (127) basierend auf der modifizierten Leistungsreferenz (311) für den generatorseitigen Umrichterteil, was die Berechnung einer Generatorstromreferenz (I_dqrefm) und das Vergleichen der Generatorstromreferenz mit einem Ist-Generatorstrom (I_dqm) beinhaltet.

7. Verfahren nach einem der vorhergehenden Ansprüche, wobei das Bestimmen des Steuersignals (V_dqm) für den generatorseitigen Umrichterteil (127) oder des Steuersignals (V_dqg) für den netzseitigen Umrichterteil (131) eine Transformation in einem d-q-Koordinatensystem beinhaltet, das mit einer Ist-Generator-Rotorfrequenz rotiert.

8. Verfahren nach einem der vorhergehenden Ansprüche, wobei das Bestimmen des Dämpfungsleistungssignals (P_DTD) basierend auf der Ist-Rotorfrequenz umfasst:
Filtern der Ist-Rotorfrequenz; und/oder
Durchführen einer Verstärkungs- und Phasenkompensation der Ist-Rotorfrequenz oder einer gefilterten Ist-Rotorfrequenz, um das kompensierte Dämpfungsleistungssignal zu erhalten;
und/oder
Begrenzen des kompensierten Dämpfungsleistungssignals, so dass es zwischen einem oberen Schwellenwert und einem unteren Schwellenwert liegt.

9. Verfahren nach einem der vorhergehenden Ansprüche, wobei das Dämpfungsleistungssignal (P_DTD) ferner basierend auf wenigstens einer Resonanzfrequenz eines Antriebsstrangs (105, 107, 109, 111) bestimmt wird, der den Rotor (105) umfasst.

10. Verfahren nach einem der vorhergehenden Ansprüche, wobei basierend auf dem Steuersignal (V_dqm) für den generatorseitigen Umrichterteil (127) eine Gate-Treiberschaltung des generatorseitigen Umrichterteils Pulsweitenmodulationssignale für Gates von Transistoren erzeugt, die in dem generatorseitigen Umrichterteil (127) enthalten sind.

11. Verfahren nach einem der vorhergehenden Ansprüche, wobei basierend auf dem Steuersignal (V_dqq) für den netzseitigen Umrichterteil (131) eine Gate-Treiberschaltung des netzseitigen Umrichterteils Pulsweitenmodulationssignale für Gates von Transistoren erzeugt, die in dem netzseitigen Umrichterteil enthalten sind.

12. Verfahren nach einem der vorhergehenden Ansprüche,
wobei das Bestimmen des Steuersignals (V_dqm) für den generatorseitigen Umrichterteil basierend auf der modifizierten Leistungsreferenz für den generatorseitigen Umrichterteil das Bestimmen, basierend auf der modifizierten Leistungsreferenz, einer Leistungs-/Drehmoment-Referenz und/oder einer Generatorspannung und/oder einer Gleichspannungszwischenkreis-Spannung umfasst, welche eine Eingangsgröße für die Stromreferenz-Berechnung ist, wobei insbesondere ein Generatorstromregler einen PI-Regler umfasst, und/oder
wobei das Bestimmen des Steuersignals (V_dqg) für den netzseitigen Umrichterteil basierend auf der modifizierten Leistungsreferenz für den netzseitigen Umrichterteil das Verwenden, insbesondere unter Berücksichtigung der modifizierten Leistungsreferenz, einer Netzspannung und/oder einer Gleichspannungszwischenkreis-Spannung und/oder eines Netzstroms und/oder einer Netzleistung als Eingangsgröße für die Stromreferenz-Berechnung umfasst, wobei insbesondere ein Generatorstromregler einen PI-Regler umfasst.

13. Anordnung (147, 247, 347) zur Steuerung eines Windturbinenumrichters (119), der einen generatorseitigen Umrichterteil (127), der mit einem elektrischen Generator der Windturbine verbunden ist, und einen netzseitigen Umrichterteil (131) aufweist, wobei die Anordnung umfasst:
einen Bestimmungsabschnitt (149), der dafür ausgelegt ist, basierend auf einer Ist-Rotorfrequenz (ωg) des elektrischen Generators der Windturbine ein Dämpfungsleistungssignal (P_DTD) zu bestimmen;
einen Steuerungsabschnitt (155), der dafür ausgelegt ist, den generatorseitigen Umrichterteil (127) basierend
auf dem Dämpfungsleistungssignal (P_DTD) zu steuern, und den netzseitigen Umrichterteil (131) basierend auf
einem kompensierten Dämpfungsleistungssignal (P_DTDGrid), das von dem Dämpfungsleistungssignal (P_DTD) abgeleitet wurde, zu steuern.

14. Windturbine (100), umfassend:
einen Generator (111);
einen Umrichter (119), der mit dem Generator gekoppelt ist und einen generatorseitigen Umrichterteil (127) und einen netzseitigen Umrichterteil (131) aufweist; und
eine Anordnung (147, 247, 347) nach Anspruch 13.

## Revendications

1. Procédé de commande d'un convertisseur de turbine éolienne (119) ayant une partie de convertisseur côté générateur (127) connectée à un générateur électrique de la turbine éolienne et une partie de convertisseur côté grille (131), le procédé comprenant les étapes consistant à :
déterminer un signal de puissance d'amortissement (P_DTD) sur la base d'une fréquence réelle du rotor (ωg) du générateur électrique de la turbine éolienne ;
commander la partie de convertisseur côté générateur (127) sur la base du signal de puissance d'amortissement (P_DTD) ; et
commander la partie de convertisseur côté grille (131) sur la base d'un signal de puissance d'amortissement compensé (P_DTDGrid) déduit à partir du signal de puissance d'amortissement (P_DTD).

2. Procédé selon la revendication 1, consistant en outre à :
déterminer une référence de puissance (P_GenRef, P_GridRef) pour la partie de convertisseur côté générateur (127) ou la partie de convertisseur côté grille (131) sur la base d'une comparaison entre une tension CC de référence (V_DCRef) et une tension CC réelle (V_DC) qui est une tension au niveau d'une liaison CC du convertisseur de turbine éolienne.

3. Procédé selon la revendication 1 ou 2, consistant en outre à :
ajouter la référence de puissance (P_GenRef) pour la partie de convertisseur côté générateur au signal de puissance d'amortissement (P_DTD), en vue d'obtenir une référence de puissance modifiée (211) pour la partie de convertisseur coté générateur ;
déterminer un signal de commande (V_dqm, 159) pour la partie de convertisseur côté générateur (127) sur la base de la référence de puissance modifiée (211) pour la partie de convertisseur coté générateur impliquant le calcul d'une référence de courant de générateur (I_dqrefm) et comparer la référence de courant de générateur à un courant de générateur réel (I_dqm).

4. Procédé selon la revendication 3, consistant en outre à :
ajouter un signal de puissance de référence de turbine éolienne (P_WTCRef) au signal de puissance d'amortissement compensé (P_DTDGrid), pour obtenir une référence de puissance modifiée (221) pour la partie de convertisseur côté grille ;
déterminer un signal de commande (V_dqg) pour la partie de convertisseur côté grille (131) sur la base de la référence de puissance modifiée (221) pour la partie de convertisseur coté grille impliquant le calcul d'une référence de courant de grille (I_dqrefg) et comparer la référence de courant de grille à un courant de grille réel (I_dqq).

5. Procédé selon la revendication 1 ou 2, consistant en outre à :
ajouter la référence de puissance (P_GridRef) pour la partie de convertisseur côté grille au signal de puissance d'amortissement compensé (P_DTDGrid) déduit à partir du signal de puissance d'amortissement (P_DTD), pour obtenir une référence de puissance modifiée (321) pour la partie de convertisseur côté grille (131) ;
déterminer un signal de commande (V_dqg) pour la partie de convertisseur côté grille sur la base de la référence de puissance modifiée (321) pour la partie de convertisseur côté grille impliquant le calcul d'une référence de courant de grille (I_dqrefg) et comparer la référence de courant de grille à un courant de grille réel (I_dqq).

6. Procédé selon la revendication 5, consistant en outre à :
ajouter un signal de puissance de référence de turbine éolienne (P_WTCRef) au signal de puissance d'amortissement (P_DTD), pour obtenir une référence de puissance modifiée (311) pour la partie de convertisseur coté générateur (127) ;
déterminer un signal de commande (V_dqm) pour la partie de convertisseur côté générateur (127) sur la base de la référence de puissance modifiée (311) pour la partie de convertisseur côté générateur impliquant le calcul d'une référence de courant de générateur (I_dqrefm) et comparer la référence de courant de générateur à un courant de générateur réel (I_dqm).

7. Procédé selon l'une des revendications précédentes, dans lequel déterminer le signal de commande (V_dqm) pour la partie de convertisseur côté générateur (127) ou le signal de commande (V_dqg) pour la partie de convertisseur coté grille (131) implique la transformation dans un système de coordonnées d à q en rotation avec une fréquence réelle de rotor de générateur.

8. Procédé selon l'une des revendications précédentes, dans lequel déterminer le signal de puissance d'amortissement (P_DTD) sur la base de la fréquence réelle de rotor consiste à :
filtrer la fréquence réelle de rotor ; et/ou
compenser une phase de gain de la fréquence réelle de rotor ou d'une fréquence réelle de rotor filtrée, pour obtenir le signal de puissance d'amortissement compensé ; et/ou
limiter le signal de puissance d'amortissement compensé afin qu'il se situe entre un seuil supérieur et un seuil inférieur.

9. Procédé selon l'une des revendications précédentes, dans lequel le signal de puissance d'amortissement (P_DTD) est déterminé en outre en se basant au moins sur une fréquence de résonance d'un train d'entraînement (105, 107, 109, 111) comprenant le rotor (105).

10. Procédé selon l'une des revendications précédentes, dans lequel sur la base du signal de commande (V_dqm) pour la partie de convertisseur côté générateur (127), un circuit de commande de grille de la partie de convertisseur côté générateur génère des signaux de modulation de largeur d'impulsion pour des grilles de transistors comprises dans la partie de convertisseur côté générateur (127).

11. Procédé selon l'une des revendications précédentes, dans lequel sur la base du signal de commande (V_dqq) pour la partie de convertisseur côté grille (131), un circuit de commande de grille de la partie de convertisseur côté grille génère des signaux de modulation de largeur d'impulsion pour des grilles de transistors compris dans la partie de convertisseur côté grille.

12. Procédé selon l'une des revendications précédentes,
dans lequel la détermination du signal de commande (V_dqm) pour la partie de convertisseur côté générateur basée sur la référence de puissance modifiée pour la partie de convertisseur côté générateur consiste à déterminer, sur la base de la référence de puissance modifiée, une référence de puissance/couple et/ou une tension de générateur et/ou une tension de liaison CC qui est entrée pour un calcul de référence réel, dans lequel une unité de commande de courant de générateur comprend une unité de commande PI, et/ou
dans lequel la détermination du signal de commande (V_dqg) pour la partie de convertisseur côté grille sur la base de la référence de puissance modifiée pour la partie de convertisseur côté grille consiste à utiliser, en particulier en considérant la référence de puissance modifiée, une tension de grille et/ou une tension de liaison CC et/ou un courant de grille et/ou une puissance de grille en tant qu'entrée pour un calcul de référence réel, dans lequel une unité de commande de courant de générateur en particulier comprend une unité de commande PI.

13. Agencement (147, 247, 347) permettant de commander un convertisseur de turbine éolienne (119) ayant une partie de convertisseur côté générateur (127) connectée à un générateur électrique de la turbine éolienne et une partie de convertisseur côté grille (131), l'agencement comprenant :
une section de détermination (149) adaptée pour déterminer un signal de puissance d'amortissement (P_DTD) sur la base d'une fréquence réelle de rotor (ωg) du générateur électrique de la turbine éolienne ;
une section de commande (155) adaptée pour :
commander la partie de convertisseur côté générateur (127) sur la base du signal de puissance d'amortissement (P_DTD) ; et
commander la partie de convertisseur côté grille (131) sur la base d'un signal de puissance d'amortissement compensé (P_DTDGrid) déduit à partir du signal de puissance d'amortissement (P_DTD).

14. Turbine éolienne (100) comprenant :
un générateur (111) ;
un convertisseur (119) couplé au générateur et ayant une partie de convertisseur côté générateur (127) et une partie de convertisseur côté grille (131) ; et
un agencement (147, 247, 347) selon la revendication 13.
